# EUROPEAN PATENT APPLICATION

(11) **EP 1 263 216 A1**
(43) Date of publication of application: **04.12.2002**
(21) Application number: 02076536.8
(22) Date of filing: 18.04.2002
(51) Int. Cl.: H04N 5/32

(54) **Method for acquiring a radiation image of a long body part using direct digital X-ray detectors**

(30) Priority: 30.04.2001 US 845588
(71) Applicant: EASTMAN KODAK COMPANY, Rochester, New York 14650 (US)
(72) Inventor: Wang, Xiaohui, Rochester, New York 14650-2201 (US); Foos, David H., Rochester, New York 14650-2201 (US)
(74) Representative: Haile, Helen Cynthia

(57) **Abstract**

A method for acquiring an elongated radiographic image comprising: positioning an elongated object between a source of x-rays and a digital image capture device having a known imaging dimension which is less than a like dimension of said elongated object; moving said device in a direction parallel to said known imaging dimension to sequential contiguous positions to acquire a sequence of radiographic images of said elongated object; and rotating said source of x-rays about an axis perpendicular to said direction of moving said device in coordination with said moving project said x-rays from said source toward said device.

## Description

This invention relates in general to digital radiography, and in particular to the imaging of a long human body part, such as the spine or the legs, using a direct digital x-ray detector system.

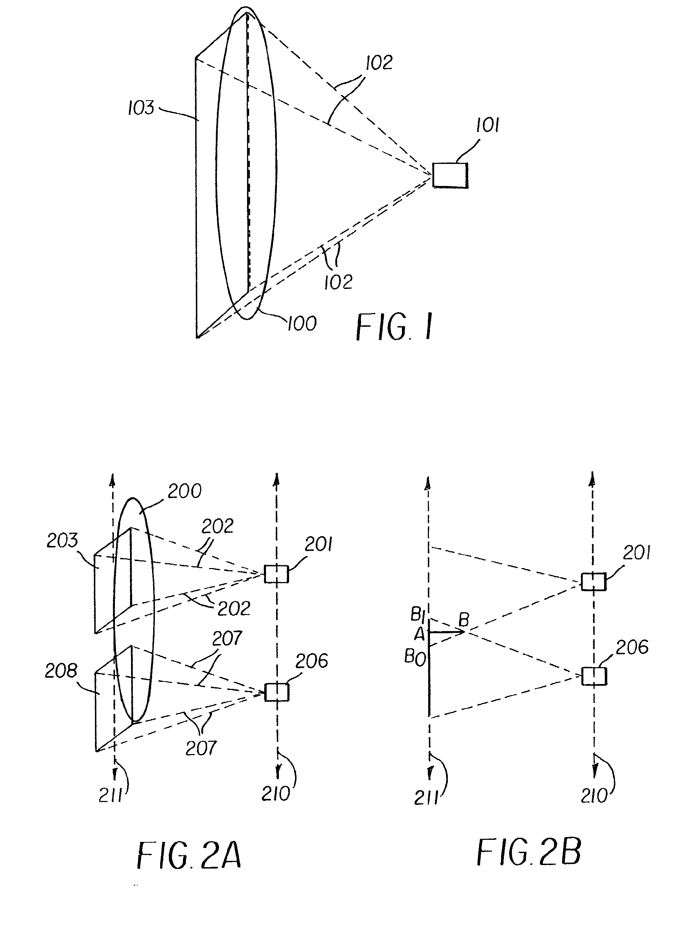

When a long segment of the human body is imaged using a conventional screen-film technique, special cassettes and films of extended length are used, such as 30 x 90 cm and 35 x 105 cm. As shown in Fig. 1, both the x-ray tube 101 and the cassette 103 are kept stationary during the exam, and an image of the patient is acquired in a single exposure. As medical institutions are migrating from analog screen-film systems to digital modalities, such as flat-panel detector based digital radiography (DR) systems, this type of exam imposes a significant challenge. This is because the sizes of digital detectors are limited by cost and technology. The largest flat panel DR plates available today are limited to 43 x 43 cm. A detector of this size is capable of imaging only a portion of the body part at a time and thus is inadequate for performing imaging exams of longer length body parts such as the full spine or full leg. To address this problem, multiple exposures at varying patient positions must be acquired with the assumption that the patient can keep still during the exam. The individual images are then stitched together to reconstruct a larger composite image. Fig. 2A shows this technique (see: U.S. Patents 5,123,056 and 4,613,983). First, the patient 200 is exposed at a first position defined by the x-ray tube position 201 and the detector position 203. The collimator of the x-ray tube is adjusted such that the x-rays 202 can barely cover the detector while protecting the patient from unnecessary radiation in the non-imaging related regions. Second, after both the x-ray tube and the detector are translated parallel along axis 210 and 211 to a second position, as indicated by 206 and 208, a second exposure of the patient is conducted. There can be a slight overlap between the consecutive detector coverage in order to facilitate image stitching. This process can be continued until the full length of the body part to be examined is imaged. However, this stereovision-like image acquisition geometry has two major drawbacks: (1) mechanical complexity because both the detector and the x-ray tube need to be translated, and (2) inherent geometric distortion that makes precise image stitching almost impossible. As shown in Fig. 2B, if an object AB is situated in both the exposure coverage of x-ray tube position 201 and 206, it will be imaged at the corresponding detector position as AB₀ and AB₁, respectively, due to the divergence of the x-rays. With AB₀ pointing downward but AB₁ pointing upward, the same object has apparently created two different images. Evidently, AB₀ and AB₁ can not be registered together in the stitched image. Therefore, theoretically the images acquired at different tube positions can never be seamlessly and precisely stitched. This severity of this problem becomes worse if the body part get thicker. There is a need to develop an imaging method with DR that not only is simple in design but also can provide distortion-free images for stitching.

According to the present invention, there is provided a solution to the problems and fulfillment of these needs.

According to a feature of the present invention, there is provided a method for acquiring an elongated radiographic image comprising: positioning an elongated object between a source of x-rays and a digital image capture device having a known imaging dimension which is less than a like dimension of said elongated object; moving said device in a direction parallel to said known imaging dimension to sequential contiguous positions to acquire a sequence of radiographic images of said elongated object; and rotating said source of x-rays about an axis perpendicular to said direction of moving said device in coordination with said moving project said x-rays from said source toward said device.

The invention has the following advantages.

1. Eliminates the stereovision-like geometric distortion caused by the current imaging method with DR systems, and allows precise registration of the partial images to reconstruct a larger composite image.
Fig. 1 is a diagrammatic view showing an imaging method used with screen-film systems.
Figs. 2A and 2B are diagrammatic views showing an imaging method used with DR systems and showing the distortion introduced by the stereovision-like effect from the two subsequent exposures.

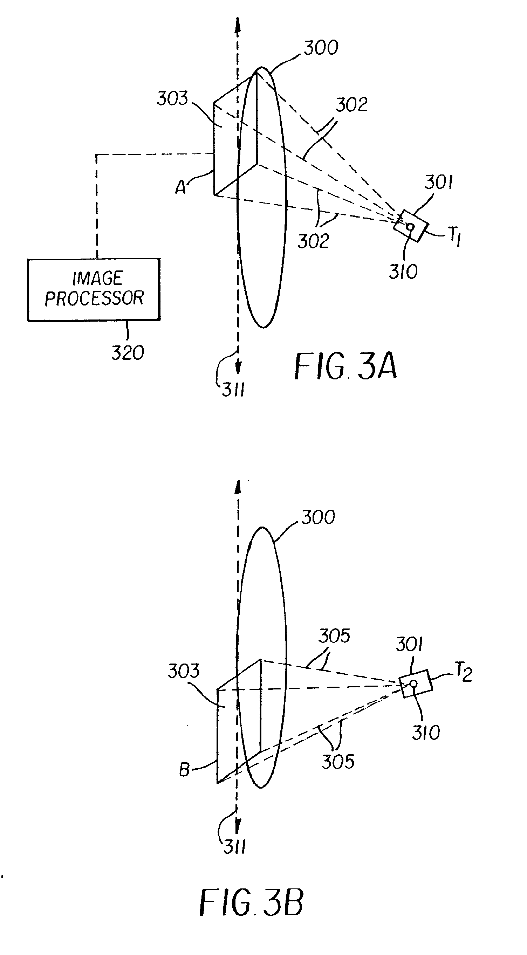

Figs. 3A and 3B are diagrammatic views illustrating a method of the invention that allows multiple partial images to be taken with similar acquisition geometry to that obtained using screen-film systems.
An overview illustration of the present invention is shown in Figs. 3A and 3B.

The digital radiographic image capture device or detector 303 can translate along axis 311 freely to various positions, the x-ray tube 301 does not translate but it tracks the detector movement by rotation along a fixed axis 310 and always directs its exposure toward the detector 303. First, the patient 300 is exposed at a first position defined by the detector position A and the x-ray tube orientation T₁. The collimator of the x-ray tube 301 is adjusted such that the x-rays 302 just cover the detector 303 for imaging. Second, after the detector 301 is translated to a second position, as indicated by B, the tube 301 rotates to a new orientation, as indicated by T₂, and the aperture of the collimator is adjusted again if necessary, a second exposure of the patient is conducted. This process can be continued until the full length of the body part to be examined is imaged. There can be a slight overlap between the consecutive detector position coverage in order to facilitate image stitching by image processor 320. In doing so, the image acquisition geometry used by the conventional screen-film is emulated. The resultant stitched composite image can achieve the equivalent image quality in terms of image appearance and geometric precision. Theoretically, the present invention requires two strict conditions (1) the x-ray tube rotational axis 310 must be perpendicular to the detector translation axis 311, and (2) axis 310 must go through the x-ray focal spot. The second requirement guarantees that the x-ray coverage from different tube orientations is concentric, which allows the composite x-ray coverage to be similar to that used in the conventional screen-film systems. In practice, the second condition can be relaxed a little to facilitate system design. For example, the rotation axis only needs to be close to the x-ray focal spot, the impact to image quality is small as long as the distance from the focal spot to the rotation axial is far less than that from the x-ray tube to the detector.

Although the present invention has been described with respect to acquiring radiographic images of elongated body parts, it will be understood that any elongated object may be subject of the radiographic imaging techniques of the invention. Digital radiographic image capture device may be any such device but preferably is a flat panel radiographic detector known to those skilled in the art.

## Claims

1. A method for acquiring an elongated radiographic image comprising:
positioning an elongated object between a source of x-rays and a digital image capture device having a known imaging dimension which is less than a like dimension of said elongated object;
moving said device in a direction parallel to said known imaging dimension to sequential contiguous positions to acquire a sequence of radiographic images of said elongated object; and
rotating said source of x-rays about an axis perpendicular to said direction of moving said device in coordination with said moving project said x-rays from said source toward said device.

2. The method of claim 1 including adjusting the aperture of a collimator located between said source and said object so that said projected x-rays cover the device for imaging.

3. The method of claim 1 wherein said source of x-rays is rotated about an axis coincident with the x-ray focal spot of said source.

4. The method of claim 1 wherein aid source of x-rays is rotated about an axis the distance of which from the x-ray focal spot of said source is far less than the distance from said source of x-rays to said image capture device.

5. The method of claim 1 wherein said elongated object positioned is an elongated human body part.
